# EUROPEAN PATENT APPLICATION

(11) **EP 4 061 036 A1**
(43) Date of publication of application: **21.09.2022**
(21) Application number: 20910877.8
(22) Date of filing: 25.12.2020
(51) Int. Cl.: H04W 12/00, H04W 12/04, H04W 48/08

(54) **METHOD FOR ESTABLISHING WI-FI CONNECTION BETWEEN TERMINAL AND WIRELESS ACCESS POINT**

(30) Priority: 03.01.2020 CN 202010004786
(71) Applicant: Huawei Technologies Co., Ltd., Shenzhen, Guangdong 518129 (CN)
(72) Inventor: QU, Lihu, Shenzhen, Guangdong 518129 (CN); AN, Kang, Shenzhen, Guangdong 518129 (CN); HE, Anchao, Shenzhen, Guangdong 518129 (CN)
(74) Representative: MERH-IP Matias Erny Reichl Hoffmann Patentanwälte PartG mbB
(86) International application number: PCT/CN2020/139504
(87) International publication number: WO 2021/136097

(57) **Abstract**

The present invention relates to a method for establishing a Wi-Fi connection between a terminal and a wireless access point, including the following steps: The wireless access point generates and distributes a to-be-obtained temporary password; the terminal obtains the temporary password, and sends a probe request to the wireless access point, where the probe request carries the encrypted to-be-authenticated temporary password; the wireless access point receives the probe request from the terminal, and perform authentication on the encrypted to-be-authenticated temporary password; the wireless access point sends a probe response to the terminal and enables a WPS session, where the probe response carries an authentication success notification; and the terminal receives the probe response from the wireless access point and enables a WPS session, where the WPS sessions enabled by the terminal and the wireless access point are used to establish the Wi-Fi connection. The method for establishing a Wi-Fi connection can enhance network security, is easy for users to operate, and has low learning costs.

## Description

This application claims priority to Chinese Patent Application No. 202010004786, filed with the Chinese Patent Office on January 3, 2020 and entitled "METHOD FOR ESTABLISHING WI-FI CONNECTION BETWEEN TERMINAL AND WIRELESS ACCESS POINT", which is incorporated herein by reference in its entirety.

### TECHNICAL FIELD

The present invention relates to the communications field, and in particular, to a method for establishing a Wi-Fi connection between a terminal and a wireless access point.

### BACKGROUND

With the popularization of Wi-Fi, there are wireless access points in most people's houses or most shops. The wireless access point is an access point of a wireless network, is commonly referred to as a "hotspot", and can be used by a plurality of terminal electronic devices to establish Wi-Fi connections to the wireless access point, so that people can conveniently perform online services such as internet surfing and information querying.

However, in an existing password access manner, a password is easy to be leaked. For example, when another user comes to a house or a shop, and wants to connect to Wi-Fi, and there is no dedicated guest Wi-Fi, a host user needs to tell the another user a formal Wi-Fi password of the host user to establish a connection. Therefore, network privacy is poor.

### SUMMARY

Some embodiments of this application provide a method and a device for establishing a Wi-Fi connection based on a temporary password. The following describes this application according to a plurality of aspects, and implementations and beneficial effects according to the following plurality of aspects may be mutually referenced when no conflict occurs.

According to a first aspect, an embodiment of this application provides a method for establishing a Wi-Fi connection between a terminal and a wireless access point, including the following steps: The wireless access point generates and distributes a to-be-obtained temporary password; the terminal obtains the temporary password, and sends a probe request to the wireless access point, where the probe request carries the encrypted to-be-authenticated temporary password; the wireless access point receives the probe request from the terminal, and perform authentication on the encrypted to-be-authenticated temporary password; the wireless access point sends a probe response to the terminal and enables a WPS session, where the probe response carries an authentication success notification; and the terminal receives the probe response from the wireless access point and enables a WPS session, where the WPS sessions enabled by the terminal and the wireless access point are used to establish the Wi-Fi connection.

The wireless access point device in this application can generate and distribute a temporary password. A host user only needs to tell another user the temporary password, so that an electronic device of the another user establishes a Wi-Fi connection to the wireless access point. This avoids leakage of a formal password, and improves network security to some extent. In addition, if the host user forgets the password, the another user may still establish the Wi-Fi connection between the electronic device of the another user and the wireless access point by using a temporary password. In addition, compared with existing access manners such as a PBC WPS and an one-click intelligent connection (a directionally selected WPS), the method for establishing a Wi-Fi connection improves user experience, is easily accepted by users, and has lower learning costs.

According to a second aspect, an embodiment of this application provides a method for establishing a Wi-Fi connection to a wireless access point, where the method is applied to a terminal and includes the following steps: obtaining a temporary password generated by the wireless access point; sending a probe request to the wireless access point, where the probe request carries the encrypted to-be-authenticated temporary password; receiving a probe response from the wireless access point, where the probe response carries an authentication success notification from the wireless access point; and enabling a WPS session to establish the Wi-Fi connection.

In some embodiments, the authentication success notification includes information about secondary encryption performed based on the temporary password, and the WPS session is enabled based on the authenticated information about the secondary encryption. This configuration further enhances the network security.

In some embodiments, the step of sending the probe request includes: determining whether the temporary password is a to-be-obtained temporary password, and if the password is the to-be-obtained temporary password, sending the probe request.

According to a third aspect, an embodiment of this application provides a method for establishing a Wi-Fi connection to a terminal, where the method is applied to a wireless access point and includes the following steps: generating and distributing a to-be-obtained temporary password; receiving a probe request from the terminal, where the probe request carries the encrypted to-be-authenticated temporary password; performing authentication one the encrypted to-be-authenticated temporary password; and sending a probe response and enabling a WPS session that is used to establish the Wi-Fi connection, where the probe response carries an authentication success notification.

In some embodiments, the authentication success notification includes information about secondary encryption performed based on the temporary password.

In some embodiments, the temporary password is updated at a predetermined time interval.

In some embodiments, the temporary password is sent to a predetermined receiving terminal in by using an SMS message or an app.

According to a fourth aspect, an embodiment of this application provides a terminal, where the terminal includes: a first obtaining module, configured to obtain a temporary password generated by a wireless access point; a first sending module, configured to send a probe request to the wireless access point, where the probe request carries the encrypted to-be-authenticated temporary password; a first receiving module, configured to receive a probe response from the wireless access point, where the probe response carries an authentication success notification from the wireless access point; and a first enabling module, configured to enable a WPS session to establish a Wi-Fi connection.

In some embodiments, the authentication success notification includes information about secondary encryption performed based on the temporary password, and the WPS session is enabled based on the authenticated information about the secondary encryption.

In some embodiments, the terminal further includes: a first determining module, configured to determine whether the temporary password is a to-be-obtained temporary password, where if the temporary password is the to-be-obtained temporary password, the first sending module sends the probe request.

According to a fifth aspect, an embodiment of this application provides a wireless access point, where the wireless access point includes: a first generation module, configured to generate a to-be-obtained temporary password; a first distribution module, configured to distribute the to-be-obtained temporary password; a second receiving module, configured to receive a probe request from a terminal, where the probe request carries the encrypted to-be-authenticated temporary password; a first authentication module, configured to perform authentication on the encrypted temporary password; a second sending module, configured to send a probe response, where the probe response carries an authentication success notification; and a second enabling module, configured to enable a WPS session that is used to establish a Wi-Fi connection.

In some embodiments, the authentication success notification includes information about secondary encryption performed based on the temporary password.

In some embodiments, the temporary password is updated at a predetermined time interval.

In some embodiments, the temporary password is sent to a predetermined receiving terminal in by using an SMS message or an app.

To make the foregoing content of the present invention more obvious and easy to understand, the following describes preferred embodiments in detail with reference to the accompanying drawings.

### BRIEF DESCRIPTION OF DRAWINGS

The following further describes specific embodiments of the present invention in detail with reference to the accompanying drawings.
FIG. 1 is an application scenario of establishing a Wi-Fi connection between a terminal and a wireless access point;
FIG. 2 is a schematic diagram of a terminal according to an embodiment;
FIG. 3 is a schematic diagram of a wireless access point according to an embodiment;
FIG. 4 is a flowchart of a method for establishing a Wi-Fi connection between a terminal and a wireless access point according to an embodiment;
FIG. 5 is a flowchart of a method for establishing a Wi-Fi connection to a wireless access point according to an embodiment;
FIG. 6 is a flowchart of a method for establishing a Wi-Fi connection to a terminal according to an embodiment;
FIG. 7 is a block diagram of a device according to an embodiment; and
FIG. 8 is a block diagram of a system on chip (SoC) according to this embodiment.

### DESCRIPTION OF EMBODIMENTS

To make purposes and technical solutions in embodiments of this application clearer, the following clearly and completely describes the technical solutions in the embodiments of this application with reference to the accompanying drawings in the embodiments of this application. It is clearly that shown embodiments are some rather than all of the embodiments of this application. Other embodiments that are obtained by a person of ordinary skill in the art based on the described embodiments of this application without creative efforts fall within the protection scope of this application.

As used herein, the term "module or unit" may refer to or include an application-specific integrated circuit (ASIC), an electronic circuit, a processor (shared, dedicated, or group) and/or a memory (shared, dedicated, or group) that execute one or more software or firmware programs, a combinational logic circuit, and/or another suitable component that provides the described functions, or may be an application-specific integrated circuit (ASIC), an electronic circuit, a processor (shared, dedicated, or group) and/or a memory (shared, dedicated, or group) that execute one or more software or firmware programs, a combinational logic circuit, and/or a part of another suitable component that provides the described functions.

With the popularization of Wi-Fi, there are wireless access points in most people's houses or most shops. The wireless access point is an access point of a wireless network, is commonly referred to as a "hotspot", and can be used by a plurality of terminal electronic devices to establish Wi-Fi connections to the wireless access point, so that people can conveniently perform online services such as internet surfing and information querying.

When another user comes to a house or a shop, and wants to connect to Wi-Fi, and there is no dedicated guest Wi-Fi, a host user needs to tell the another user a formal Wi-Fi password of the host user to establish a connection. Therefore, network privacy is poor. In addition, if the host user forgets the password, the host user needs to retrieve the password by using a series of actions such as entering a web user interface or enabling an app, and the operation is complex.

However, the wireless access point device in this application can generate and distribute a temporary password. The host user only needs to tell the another user the temporary password, so that an electronic device of the another user establishes a Wi-Fi connection to the wireless access point. This avoids leakage of the formal password, and improves network security to some extent. In addition, if the host user forgets the password, the another user may still establish the Wi-Fi connection between the electronic device of the another user and the wireless access point by using a temporary password. In addition, compared with existing access manners such as a PBC WPS and an one-click intelligent connection (a directionally selected WPS), the method for establishing a Wi-Fi connection improves user experience, is easily accepted by users, and has lower learning costs.

In this application, the terminal electronic device may be a mobile phone, a handheld PC, a personal digital assistant, a portable media player, or various other devices. Generally, a mobile terminal having a Wi-Fi function may be understood as the electronic device in this application. The wireless access point may be a wireless router, a CPE (Customer Premise Equipment, customer premise equipment) router, or the like.

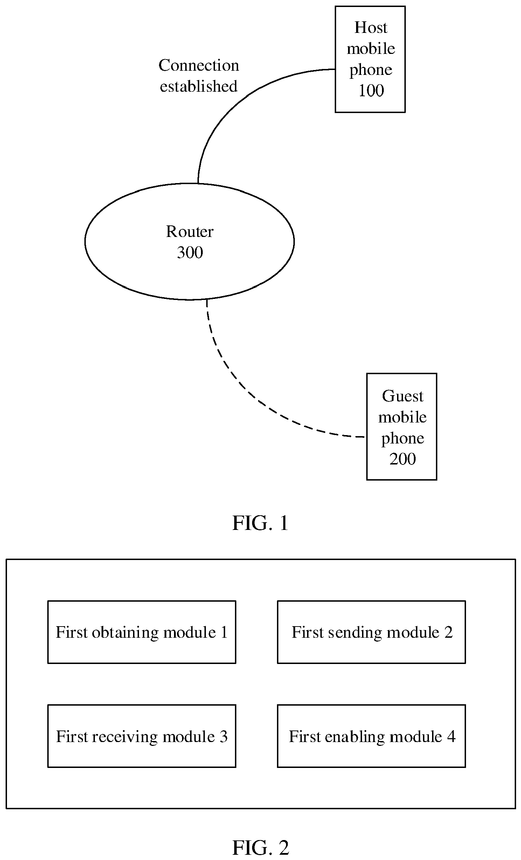

FIG. 1 is an application scenario of establishing a Wi-Fi connection between a terminal and a wireless access point. An example in which the terminal is a guest mobile phone is used, and an example in which the wireless access point is a wireless gateway CPE router is used. The CPE router can receive a mobile signal and forward the mobile signal as a wireless Wi-Fi signal, is a device that can convert a high-speed 4G or 5G signal into a Wi-Fi signal, and can support a plurality of mobile terminals simultaneously accessing the internet. It should be noted that the application scenario is a case in which the guest mobile phone wants to establish the Wi-Fi connection to the CPE router for the first time.

Referring to FIG. 1, a host mobile phone 100 has established a connection to a router 300 in advance. When a guest mobile phone 200 wants to establish a Wi-Fi connection to the router 300, first, a host user triggers the router 300 to obtain a temporary password, and tells a guest user the temporary password. Then, the guest user can enter a WLAN interface on the guest mobile phone 200. The router 300 broadcasts, and the guest mobile phone 200 can automatically find an SSID of a wireless network. In this case, the guest user only needs to click the corresponding SSID and enter the temporary password to establish the Wi-Fi connection.

Referring to FIG. 2, a terminal provided in this application includes a first obtaining module 1, a first sending module 2, a first receiving module 3, and a first enabling module 4. The first obtaining module 1 is configured to obtain a temporary password generated by a wireless access point. The first sending module is configured to send a probe request to the wireless access point, where the probe request carries the encrypted to-be-authenticated temporary password. The first receiving module 3 is configured to receive a probe response from the wireless access point, where the probe response carries an authentication success notification from the wireless access point. The first enabling module 4 is configured to enable a WPS session to establish a Wi-Fi connection.

The terminal in this application may further include a first determining module. The first determining module is configured to determine, according to a preset password rule, whether the password is a to-be-obtained temporary password. If the password is the to-be-obtained temporary password, the first sending module sends the probe request. It should be noted that the temporary password automatically becomes invalid after the Wi-Fi connection is successful or after a certain time interval. The preset password rule is described later.

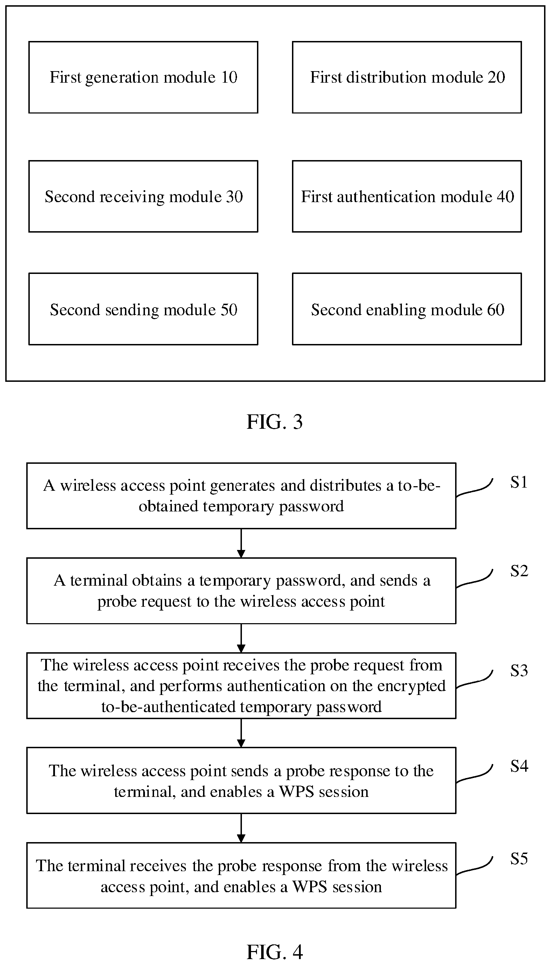

Referring to FIG. 3, a wireless access point provided in this application includes a first generation module 10, a first distribution module 20, a second receiving module 30, a first authentication module 40, a second sending module 50, and a second enabling module 60. The first generation module 10 is configured to generate a to-be-obtained temporary password. The first distribution module 20 is configured to distribute the to-be-obtained temporary password. The second receiving module 30 is configured to receive a probe request from a terminal, where the probe request carries the encrypted to-be-authenticated temporary password. The first authentication module 40 is configured to perform authentication on the encrypted temporary password. The second sending module 50 is configured to send a probe response, where the probe response carries an authentication success notification. The second enabling module 60 is configured to enable a WPS session that is used to establish a Wi-Fi connection.

Referring to FIG. 4, some embodiments of this application disclose a method for establishing a Wi-Fi connection between a terminal and a wireless access point, where the method includes the following steps:
Step S 1: The wireless access point generates and distributes a to-be-obtained temporary password.
Step S2: The terminal obtains the temporary password, and sends a probe request to the wireless access point, where the probe request carries the encrypted to-be-authenticated temporary password.
Step S3: The wireless access point receives a probe request from the terminal, and performs authentication on the encrypted to-be-authenticated temporary password.
Step S4: The wireless access point sends a probe response to the terminal and enables a WPS session, where the probe response carries an authentication success notification.
Step S5: The terminal receives the probe response from the wireless access point and enables a WPS session, where the WPS sessions enabled by the terminal and the wireless access point are used to establish the Wi-Fi connection.

Each step is described in detail below. An example in which the terminal is a guest mobile phone is used.

In step S1, the wireless access point generates and distributes the to-be-acquired temporary password. The wireless access point generates a temporary password at a certain time interval. In some embodiments, the time interval may be 2 minutes, and in other embodiments, the time interval may alternatively be less than 2 minutes or more than 2 minutes. The time interval only needs to ensure that a guest mobile phone has enough time to obtain the temporary password, and password security is not weakened due to a long time interval.

In step S2, the terminal obtains the temporary password, and sends the probe request to the wireless access point. The probe request carries the encrypted to-be-authenticated temporary password. In some embodiments, the temporary password is sent to a host mobile phone by using an SMS message, a smart home app, or WeChat. In other embodiments, the temporary password may be sent to a predetermined receiving terminal by using another means.

In this application, the wireless access point device has a function of sending an SMS message to a mobile phone. The host mobile phone may establish a connection to the wireless access point in advance, and a host user may trigger the wireless access point device, so that the wireless access point device sends an SMS message that carries a temporary password to the host mobile phone. The host user may further query, by using an app associated with the CPE router such as a smart home app, the temporary password generated by the wireless access point device. Then, the host user tells the guest user the temporary password, or sets, in the app, that the temporary password is sent to a specified guest mobile phone number by using an SMS message, so that the host user enters the temporary password on a guest mobile phone terminal. Therefore, the guest mobile phone obtains the temporary password, and sends the probe request to the wireless access point. It should be noted that in this application, an example in which the terminal is a guest mobile phone is used. In other embodiments, the terminal may alternatively be another user mobile phone of a non-host user.

Step S2 may further include: determining whether the password is a to-be-obtained temporary password, and if the password is the to-be-obtained temporary password, sending the probe request.

It should be noted that, a difference between a temporary password and a formal password may lie in that lengths of the two passwords are different. For example, if the formal password is more than eight characters, the temporary password should be less than or equal to eight characters such as four to six characters, so that the mobile phone can identify whether the password is a temporary password. The difference between the temporary password and the formal password may further lie in that the temporary password has a certain setting rule. For example, an authentication character is uniformly added to the last character of the temporary password. Therefore, the mobile phone may determine, according to the setting rule, whether the password is a temporary password.

That is, before sending the probe request to the wireless access point, the terminal may first determine, based on an entered password, whether the password is a temporary password. After determining, based on the difference between the temporary password and the formal password, that the password is the temporary password, the terminal sends the probe request that carries the temporary password to the wireless access point. If it is determined that the password is not the temporary password, the terminal does not send the probe request.

In step S3, the wireless access point receives the probe request from the terminal, and perform the authentication on the encrypted to-be-authenticated temporary password. That is, after determining that the password is the temporary password, the terminal sends the probe request to the wireless access point, where the probe request carries the encrypted to-be-authenticated temporary password. The wireless access point receives the probe request, and performs the authentication on the encrypted temporary password. Different methods of authentication are determined based on an encryption rule such as symmetric encryption and asymmetric encryption. For example, if the encryption rule is asymmetric encryption, no decryption is performed on the encrypted temporary password during the authentication. If the encryption rule is symmetric encryption, decryption is performed on the encrypted temporary password during the authentication.

In step S4, the wireless access point sends the probe response to the terminal and enables the WPS session. That is, after the detection request from the mobile phone is authenticated by the wireless access point, the wireless access point sends the probe response to the mobile phone, and enables the WPS session. In some embodiments, the probe response carries the authentication success notification. In other embodiments, the authentication success notification may further include information about secondary encryption performed based on the temporary password, and the WPS session is enabled based on the authenticated information about the secondary encryption. This further improves the network security.

In step S5, the terminal receives the probe response from the wireless access point and enables the WPS session. The WPS sessions enabled by the terminal and the wireless access point are used to establish the Wi-Fi connection. That is, after the wireless access point and the terminal each enable the WPS session, the terminal can establish the Wi-Fi connection to the wireless access point.

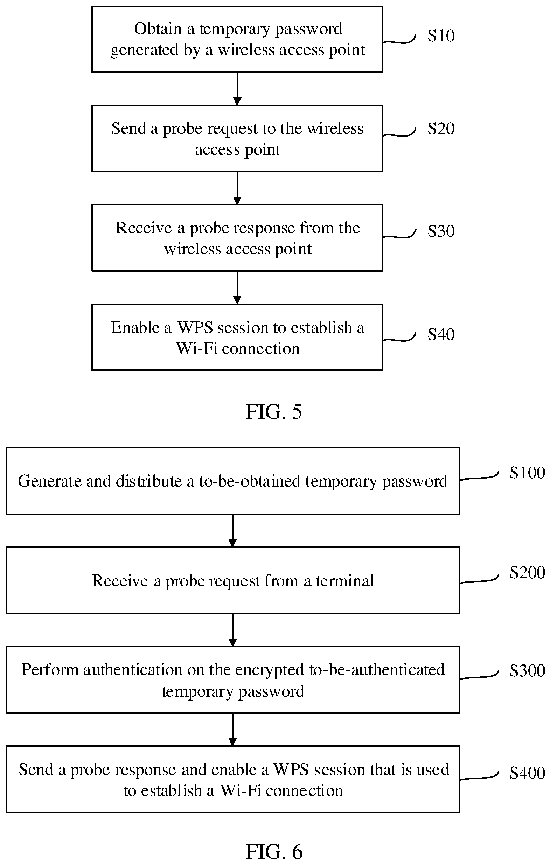

Referring to FIG. 5, this application further provides a method for establishing a Wi-Fi connection to a wireless access point. The method is applied to a terminal, and includes the following steps:
Step S10: Obtain a temporary password generated by the wireless access point.
Step S20: Send a probe request to the wireless access point, where the probe request carries the encrypted to-be-authenticated temporary password.
Step S30: Receive a probe response from the wireless access point, where the probe response carries an authentication success notification from the wireless access point.
Step S40: Enable a WPS session to establish the Wi-Fi connection.

Referring to FIG. 6, this application further provides a method for establishing a Wi-Fi connection to a terminal. The method is applied to a wireless access point, and includes the following steps:
Step S 100: Generate and distribute a to-be-obtained temporary password.
Step S200: Receive a probe request from the terminal, where the probe request carries the encrypted to-be-authenticated temporary password.
Step S300: Perform authentication on the encrypted to-be-authenticated temporary password.
Step S400: Send a probe response and enable a WPS session that is used to establish the Wi-Fi connection, where the probe response carries an authentication success notification.

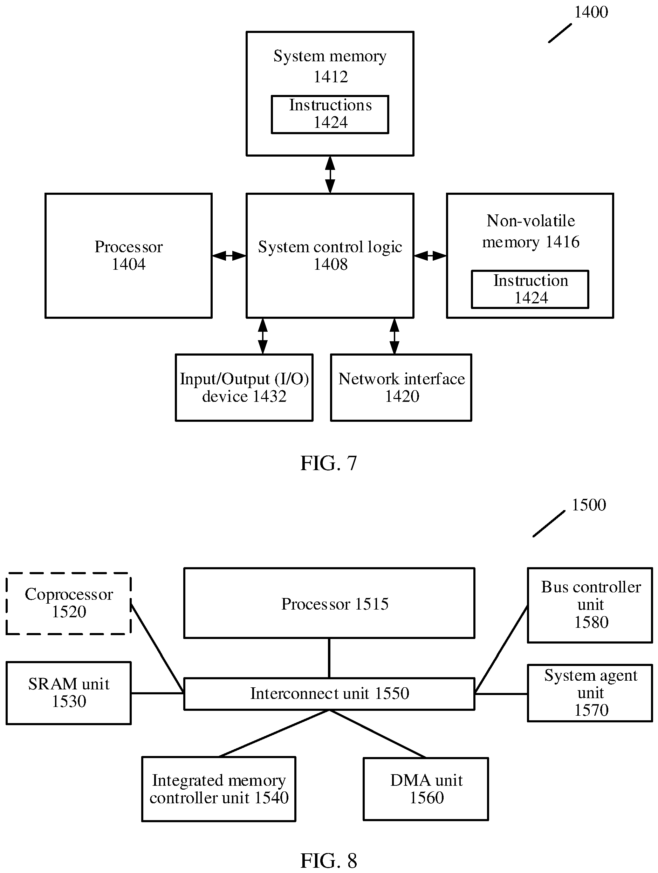

Referring to FIG. 7, FIG. 7 is a block diagram of a system 1400 according to an embodiment of this application. FIG. 7 is an example system 1400 according to various embodiments. In an embodiment, the system 1400 may include one or more processors 1404, system control logic 1408 that is connected to at least one of the processors 1404, a system memory 1412 that is connected to the system control logic 1408, a non-volatile memory (NVM) 1416 that is connected to the system control logic 1408, and a network interface 1420 that is connected to the system control logic 1408.

In some embodiments, the processor 1404 may include one or more single-core or multi-core processors. In some embodiments, the processor 1404 may include any combination of a general purpose processor and a dedicated processor (such as a graphics processor, an application processor, and a baseband processor). In embodiments in which the system 1400 uses an eNB (Evolved Node B, evolved Node B) 101 or a RAN (Radio Access Network, radio access network) controller 102, the processor 1404 may be configured to perform various conforming embodiments, for example, one or more of the plurality of embodiments shown in FIG. 1 to FIG. 4.

In some embodiments, the system control logic 1408 may include any suitable interface controller to provide any suitable interface to at least one of the processors 1404 and/or any suitable device or component that is communicated with the system control logic 1408.

In some embodiments, the system control logic 1408 may include one or more memory controllers to provide an interface to connect to the system memory 1412. The system memory 1412 may be configured to load and store data and/or instructions. In some embodiments, the memory 1412 of the system 1400 may include any suitable volatile memory, such as a suitable dynamic random access memory (DRAM).

The NVM/memory 1416 may include one or more tangible non-transitory computer-readable media that are configured to store data and/or instructions. In some embodiments, the NVM/memory 1416 may include any suitable non-volatile memory such as a flash memory and/or any suitable non-volatile storage device, such as at least one of an HDD (Hard Disk Drive, hard disk drive), a CD (Compact Disc, compact disc) drive, and a DVD (Digital Versatile Disc, digital versatile disc) drive.

The NVM/memory 1416 may include some of storage resources on an apparatus in which the system 1400 is installed, or may be accessed by a device, but not necessarily part of the device. For example, the NVM/memory 1416 may be accessed by using the network interface 1420 through a network.

In particular, the system memory 1412 and the NVM/memory 1416 each may include a temporary copy and a permanent copy of an instruction 1424, respectively. The instruction 1424 may include an instruction that leads the system 1400 to implement the methods shown in FIG. 3 and FIG. 4 when the instruction is executed by at least one of the processors 1404. In some embodiments, the instruction 1424, hardware, firmware, and/or software components of the system may additionally/alternately be deployed in the system control logic 1408, the network interface 1420, and/or the processor 1404.

The network interface 1420 may include a transceiver, and is configured to provide a radio interface for the system 1400 to communicate with any other suitable device (such as a frontend module, and an antenna) through one or more networks. In some embodiments, the network interface 1420 may be integrated with other components of the system 1400. For example, the network interface 1420 may be integrated with at least one of the processor 1404, the system memory 1412, the NVM/memory 1416, and a firmware device (not shown) having instructions. When at least one of the processor 1404 executes the instructions, the system 1400 implements the methods shown in FIG. 4 to FIG. 6.

The network interface 1420 may further include any suitable hardware and/or firmware to provide a multiple-input multiple-output radio interface. For example, the network interface 1420 may be a network adapter, a wireless network adapter, a telephone modem, and/or a wireless modem.

In one embodiment, at least one of the processors 1404 may be packaged with logic of one or more controllers for the system control logic 1408 to form a system in package (SiP). In one embodiment, at least one of the processors 1404 may be integrated on a same die with logic of one or more controllers for the system control logic 1408 to form a system on chip (SoC).

The system 1400 may further include an input/output (I/O) device 1432. The I/O device 1432 may include: a user interface through which a user can interact with the system 1400; and a peripheral component interface through which a peripheral component can also interact with the system 1400. In some embodiments, the system 1400 further includes a sensor configured to determine at least one of an environmental condition and location information that are associated with the system 1400.

In some embodiments, the user interface may include but is not limited to a display (for example, a liquid crystal display, and a touchscreen display), a speaker, a microphone, one or more cameras (for example, a still image camera and/or video camera), a flashlight (for example, a light emitting diode flashlight), and a keyboard.

In some embodiments, the peripheral component interface may include but is not limited to a non-volatile memory port, an audio jack, and a power interface.

In some embodiments, the sensor may include but is not limited to a gyroscope sensor, an accelerometer, a proximity sensor, an ambient light sensor, and a positioning unit. The positioning unit may further be a part of the network interface 1420 or may interact with the network interface 1420 to communicate with a component (for example, a global positioning system (GPS) satellite) for a positioning network.

According to an embodiment of this application, FIG. 8 is a block diagram of an SoC (System on Chip, system on chip) 1500. In FIG. 8, similar components are represented by a same reference numeral Also, a dashed box is an optional feature of a more advanced SoC. In FIG. 8, the SoC 1500 includes an interconnection unit 1550 that is coupled to an application processor 1515, a system agent unit 1570, a bus controller unit 1580, an integrated memory controller unit 1540, one or more coprocessors 1520 that may include integrated graphics logic, image processors, audio processors, and video processors, a static random access memory (SRAM) unit 1530, and a direct memory access (DMA) unit 1560. In an embodiment, the coprocessor 1520 includes a dedicated processor, such as a network or communications processor, a compression engine, a GPGPU, a high throughput MIC processor, or an embedded processor.

Embodiments of mechanisms disclosed in this application may be implemented in hardware, software, firmware, or a combination of these implementation modes. The embodiments of this application may be implemented as a computer program or program code executed on a programmable system, and the programmable system includes at least one processor and a storage system (including volatile and/or non-volatile memory and/or storage elements), at least one input device, and at least one output device.

The program code may be applied to input instructions to perform functions described in this application and generate output information. The output information may be applied to the one or more output devices in a known manner. For purposes of this application, a processing system includes any system having a processor such as a digital signal processor (DSP), a microcontroller, an application-specific integrated circuit (ASIC), or a microprocessor.

The program code may be implemented by using a high-level programming language or an object-oriented programming language, to communicate with the processing system. The program code may also be implemented by using an assembly language or a machine language when required. Actually, the mechanisms described in this application are not limited to the scope of any particular programming language. In any case, the language may be a compiled language or an interpretive language.

In some cases, the disclosed embodiments may be implemented in hardware, firmware, software, or any combination thereof. The disclosed embodiments may also be implemented as instructions carried by or stored on one or more temporary or non-transitory machine-readable (for example, computer-readable) storage media, which may be read and executed by one or more processors. For example, the instructions may be distributed through a network or through another computer-readable medium. Therefore, the machine-readable medium may include any mechanism for storing or transmitting information in a machine (for example, a computer) readable form, including, but not limited to, a floppy disc, a compact disc, an optical disc, a compact disc read-only memory (CD-ROMs), a magneto-optical disc, a read-only memory (ROM), a random access memory (RAM), an erasable programmable read-only memory (EPROM), an electrically erasable programmable read-only memory (EEPROM), a magnetic card or optical card, a flash memory, or a tangible machine-readable memory for transmitting information (for example, a carrier-wave, infrared, and digital signal) in electrical, optical, acoustic, or other forms of propagating signals by using the internet. Therefore, the machine-readable medium includes any type of machine-readable medium suitable for storing or transmitting electronic instructions or information in a machine (for example, a computer) readable form.

In the accompanying drawings, some structural or method features may be shown in a particular arrangement and/or order. However, it should be understood that such a particular arrangement and/or order may not be required. In some embodiments, the features may be arranged in a manner and/or order different from that shown in the illustrative accompanying drawings. In addition, inclusion of the structural or method features in a particular figure does not imply that such features are required in all embodiments, and in some embodiments, these features may not be included or may be combined with other features.

It should be noted that all units/modules described in device embodiments of this application are logical units/modules. Physically, one logical unit/module may be a physical unit/module, or may be a part of a physical unit/module, or may be implemented by using a combination of a plurality of physical units/modules. Physical implementations of these logical units/modules are not the most important, and a combination of functions implemented by these logical units/modules is a key for resolving the technical problem in this application. In addition, to highlight an innovative part of this application, the foregoing device embodiments of this application do not introduce a unit/module that is not closely related to resolving the technical problem in this application. This does not indicate that no other unit/module exists in the foregoing device embodiments.

It should be noted that in the examples and specifications of this patent, relationship terms such as first and second are only used to distinguish one entity or operation from another entity or operation, and do not necessarily require or imply that any actual relationship or sequence exists between these entities or operations. Moreover, the terms "include", "comprise", or their any other variant is intended to cover a non-exclusive inclusion, so that a process, a method, an article, or a device that includes a list of elements not only includes those elements but also includes other elements that are not expressly listed, or further includes elements inherent to such a process, method, article, or device. An element preceded by "includes a ..." does not, without more constraints, preclude the existence of additional identical elements in the process, method, article, or device that includes the element.

In conclusion, the foregoing embodiments in the present invention are merely illustrative of principles and effects of the present invention, but are not intended to limit the present invention. Any person skilled in the art may modify or alter the above embodiments without departing from the spirit and scope of the present invention. Therefore, all equivalent modifications or alterations made by persons having ordinary knowledge in the technical field without departing from the spirit and technical idea disclosed in the present invention shall still be covered by the claims of the present invention.

## Claims

1. A method for establishing a Wi-Fi connection between a terminal and a wireless access point, comprising the following steps:
generating and distributing, by the wireless access point, a to-be-obtained temporary password;
obtaining, by the terminal, the temporary password, and sending a probe request to the wireless access point, wherein the probe request carries the encrypted to-be-authenticated temporary password;
receiving, by the wireless access point, the probe request from the terminal, and performing authentication on the encrypted to-be-authenticated temporary password;
sending, by the wireless access point, a probe response to the terminal, and enabling a WPS session, wherein the probe response carries an authentication success notification; and
receiving, by the terminal, the probe response from the wireless access point, and enabling a WPS session, wherein
the WPS sessions enabled by the terminal and the wireless access point are used to establish the Wi-Fi connection.

2. A method for establishing a Wi-Fi connection to a wireless access point, applied to a terminal, and comprising the following steps:
obtaining a temporary password generated by the wireless access point;
sending a probe request to the wireless access point, wherein the probe request carries the encrypted to-be-authenticated temporary password;
receiving a probe response from the wireless access point, wherein the probe response carries an authentication success notification from the wireless access point; and
enabling a WPS session to establish the Wi-Fi connection.

3. The method for establishing a Wi-Fi connection to a wireless access point according to claim 2, wherein the authentication success notification comprises information about secondary encryption performed based on the temporary password, and the WPS session is enabled based on the authenticated information about the secondary encryption.

4. The method for establishing a Wi-Fi connection to a wireless access point according to claim 2, wherein the step of sending the probe request comprises:
determining whether the temporary password is a to-be-obtained temporary password, and if the temporary password is the to-be-obtained temporary password, sending the probe request.

5. A method for establishing a Wi-Fi connection to a terminal, applied to a wireless access point, and comprising the following steps:
generating and distributing a to-be-obtained temporary password;
receiving a probe request from the terminal, wherein the probe request carries the encrypted to-be-authenticated temporary password;
performing authentication on the encrypted to-be-authenticated temporary password; and
sending a probe response and enabling a WPS session that is used to establish the Wi-Fi connection, wherein the probe response carries an authentication success notification.

6. The method for establishing a Wi-Fi connection to a terminal according to claim 5, wherein the authentication success notification comprises information about secondary encryption performed based on the temporary password.

7. The method for establishing a Wi-Fi connection to a terminal according to claim 5, wherein the temporary password is updated at a predetermined time interval.

8. The method for establishing a Wi-Fi connection to a terminal according to claim 5, wherein the temporary password is sent to a predetermined receiving terminal by using an SMS message or an app.

9. A terminal, comprising:
a first obtaining module, configured to obtain a temporary password generated by a wireless access point;
a first sending module, configured to send a probe request to the wireless access point, wherein the probe request carries the encrypted to-be-authenticated temporary password;
a first receiving module, configured to receive a probe response from the wireless access point, wherein the probe response carries an authentication success notification from the wireless access point; and
a first enabling module, configured to enable a WPS session to establish a Wi-Fi connection.

10. The terminal according to claim 9, wherein the authentication success notification comprises information about secondary encryption performed based on the temporary password, and the WPS session is enabled based on the authenticated information about the secondary encryption.

11. The terminal according to claim 9, further comprising:
a first determining module, configured to determine whether the temporary password is a to-be-obtained temporary password, wherein if the temporary password is the to-be-obtained temporary password, the first sending module sends the probe request.

12. A wireless access point, comprising:
a first generation module, configured to generate a to-be-obtained temporary password;
a first distribution module, configured to distribute the to-be-obtained temporary password;
a second receiving module, configured to receive a probe request from a terminal, wherein the probe request carries the encrypted to-be-authenticated temporary password;
a first authentication module, configured to perform authentication on the encrypted temporary password;
a second sending module, configured to send a probe response, wherein the probe response carries an authentication success notification; and
a second enabling module, configured to enable a WPS session that is used to establish a Wi-Fi connection.

13. The wireless access point according to claim 12, wherein the authentication success notification comprises information about secondary encryption performed based on the temporary password.

14. The wireless access point of claim 12, wherein the temporary password is updated at a predetermined time interval.

15. The wireless access point according to claim 12, wherein the temporary password is sent to a predetermined receiving terminal by using an SMS message or an app.
